# EUROPÄISCHE PATENTSCHRIFT

(11) **EP 0 925 163 B1**
(45) Veröffentlichungstag und Bekanntmachung des Hinweises auf die Patenterteilung: **06.12.2000**
(21) Anmeldenummer: 97943733.2
(22) Anmeldetag: 03.09.1997
(51) Int. Cl.: B29C 37/02, B23D 79/02, B23B 51/10, F41A 29/02

(54) **VORRICHTUNG ZUM ENTGRATEN VON WERKSTÜCKEN, INSBESONDERE FORMTEILEN UND GIESSTEILEN AUS KUNSTSTOFF, GUMMI ODER DGL.**
DEVICE FOR DEBURRING WORKPIECES, IN PARTICULAR MOULDED PARTS AND CASTINGS MADE OF PLASTICS, RUBBER OR THE LIKE
DISPOSITIF POUR L'EBAVURAGE DE PIECES, EN PARTICULIER DE PIECES MOULEES ET DE PIECES COULEES EN PLASTIQUE, EN CAOUTCHOUC OU ANALOGUES

(30) Priorität: 07.09.1996 DE 29615629 U
(43) Veröffentlichungstag der Anmeldung: 30.06.1999
(73) Patentinhaber: Prösl, Johanna, 92708 Mantel (DE)
(72) Erfinder: Prösl, Johanna, 92708 Mantel (DE)
(74) Vertreter: Dreiss, Fuhlendorf, Steimle & Becker, Patentanwälte
(86) Internationale Anmeldenummer: DE9701928
(87) Internationale Veröffentlichungsnummer: WO9809787

(56) Entgegenhaltungen:
- DE-A- 4 000 403
- DE-A- 4 310 831
- DE-A- 4 445 592
- SU-A- 1 426 813
- US-A- 3 076 254

## Beschreibung

Die Erfindung betrifft eine Vorrichtung nach dem Oberbegriff des Anspruches 1.

Es sind Entgratwerkzeuge mit starren Schneiden bekannt, mit deren Hilfe die Grate an Formteilen entfernt werden können. Diese Werkzeuge werden mit einer einstellbaren Andrückkraft an das zu bearbeitende Werkstück angedrückt. Hierbei besteht jedoch in der Praxis das Problem, daß der Grat nur teilweise entfernt werden kann, oder daß beim Entgraten nicht nur der Grat selbst beseitigt wird, sondern das Werkzeug auch in die Oberfläche des Werkstückes eingreift.

Des weiteren sind rotierende Werkzeuge in Form von Entgratbürsten bekannt, deren Borsten aus Metall bestehen und die so eingespannt sind, daß sie im Betrieb ihre Form nicht oder praktisch nicht verändern. Beim Entgraten von Kunststoff- oder Gummiteilen ist jedoch die Werkstückoberfläche ebenfalls der Gefahr einer Beschädigung ausgesetzt, da das Material des Werkstücks erheblich weicher ist als das des Werkzeuges und bei einem Eingriff des Werkzeuges in die Oberfläche des Werkstückes Material abgenommen wird.

Ferner sind (aus der DE 44 45 592 A1) rotierende Werkzeuge bekannt, die ein kontinuierliches Metalldrahtseil verwenden, dessen Enden miteinander verbunden sind und das in Umfangsrichtung bzw. konzentrisch zur Rotationsachse des Werkzeuges eine Vielzahl von achsparallelen Abschnitten aufweist, die den Außenumfang des Werkzeugs darstellen. Das Metalldrehteil ist um Halter geschlungen und die einzelnen Drahtseilabschnitte sind so an den Haltern festgelegt, daß sie in radialer Richtung nachgiebig sind, so daß sie sich aufgrund der Fliehkraft im Rotationsbetrieb nach außen ausbauchen und einen ela-stischen Druck gegen die Werkstückoberfläche ausüben. Ein derartiges Werkzeug führt in der Praxis zu Problemen, weil bei der Bearbeitung komplizierterer Konturen das Metallseil je nach Werkstoff und Form des Werkstückes die Werkstückoberfläche angreift und beschädigt, weil die Standzeiten bedingt durch die Reibung des Seiles an den Haltern und Seilführungsrollen extrem kurz sind, das Metallseil deshalb häufig ausgewechselt und demzufolge der automatische Arbeitsprozeß unterbrochen werden muß, und weil die aufgrund der Halterschmierung vom Seil mitgeführten Schmierpartikel am Werkstück unerwünscht sind und vermieden werden müssen.

Aufgabe der Erfindung ist es, eine rotierende Vorrichtung der gattungsgemäßen Art so auszugestalten, daß das Werkzeug auch komplizierte Formen von Konturen und Graten an Werkstückoberflächen problemlos bearbeiten kann, einen einfachen Aufbau hat, und eine hohe Standzeit besitzt.

Gemäß der Erfindung wird diese Aufgabe mit einer Vorrichtung der gattungsgemäßen Art gelöst, die so ausgebildet ist, daß ein oberer und ein unterer Träger am Schaft befestigt sind, die Werkzeugelemente aus einzelnen Filamenten, Fäden oder dergl. bzw. Bündeln hiervon bestehen, deren Enden im oberen und unteren Träger befestigt sind, und daß zwischen oberem und unterem Träger eine Federanordnung konzentrisch zum Schaft angeordnet ist. Die erfindungsgemäße Vorrichtung kann in Verbindung mit einem motorisch angetriebenen Handgerät, wie z.B. einer Bohrmaschine, betrieben werden, sie kann jedoch auch an einen Roboterkopf angesetzt werden, der in vorprogrammierter Weise selbsttätig das jeweils zu bearbeitende Werkstück entgratet.

Die Werkzeugelemente, die aus einzelnen Fäden, Schnüren oder dergl. bzw. Bündeln hiervon bestehen, sind vorzugsweise Filamente, die einzeln oder in Bündeln am oberen und am unteren Träger befestigt sind. Zweckmäßigerweise sind die Enden der Fäden bzw. Filamente an den Trägern eingespannt. Bei einer bevorzugten Ausführungsform der Erfindung sind die Enden der Fäden bzw. Filamente zwischen Trägerkörper und einem diesen übergreifenden deckelartigen Abschluß eingeklemmt, so daß durch das unter Druck erfolgende Aufsetzen des Deckels die Gesamtheit der Enden der Fäden oder Filamente festgelegt wird.

Bei einer abgeänderten Ausführungsform der Erfindung weisen der obere und der untere Träger auf ihrer Umfangsfläche jeweils radial nach außen gerichtete Ansätze auf, die so ausgebildet sind, daß sie die Fäden bzw. Fadenbündel aufnehmen. Diese Ansätze sind beispielsweise in die Umfangsfläche der Träger eingeschraubte Schraubbolzen, die an ihrem äußeren Ende Umfangsrillen, Schraubköpfe oder dergl. aufweisen, in denen die Fäden bzw. Fadenbündel aufgenommen werden. Die Fäden können fortlaufend um die Aufnahmerillen als Endlos-Fäden oder in Schleifen geführt sein, sie können Fadenringe sein, die zwischen jeweils einem oberen und einem unteren Träger gespannt sind, oder dergl. Um die Fäden bzw. Fadenbündel in den Aufnahmen der Träger festzuhalten bzw. festzuklemmen, wird jeweils ein deckelartiger Abschluß auf den oberen und den unteren Träger aufgesetzt, derart, daß der freie Deckelrand Elemente aufweisen, die durch den Druck des Deckels auf den Träger retiert bzw. festgeklemmt werden, so daß die Räden ihre Position an den Trägern im Betrieb nicht verlassen können. Diese Elemente sind beispielsweise O-Ringdichtungen. Auc h bei dieser Ausführungsform ist eine Federanordnung vorgesehen, um die Träger gegeneinander vorzuspannen.

Mit der erfindungsgemäßen Vorrichtung wird erreicht, daß die Werkzeugelemente in Form von Fäden und Filamenten, beispielsweise in Form von Kunststoff-Schnüren oder auch Metallfäden auf besonders einfache und zweckmäßige Weise ausgewechselt werden können, weil die Enden der einzelnen Fäden bzw. Filamente nur ein- und ausgeklemmt werden brauchen oder mit den oberen und unteren Trägern zusammen als eine Einheit eingesetzt und durch die deckelartigen oberen und unteren Abschlüsse festgelegt werden. Die Länge der Fäden bzw. Filamente ist dabei größer gewählt als der Abstand zwischen dem oberen und dem unteren Träger, so daß die Fäden bzw. Filamente im mittleren Bereich radial nach außen gewölbt sind. Das Ausmaß dieser Wölbung kann je nach den Bedürfnissen der praktischen Anwendung und in Abhängigkeit von den Erfordernissen des Entgratens in Verbindung mit den Materialien des Werkstückes eingestellt werden bzw. sich selbsttätig bei der Rotation des Werkzeuges einstellen. Dies geschieht dadurch, daß zwischen oberem und unterem Träger eine Federanordnung, z.B. eine Wendelfeder eingesetzt wird, die als Druckfeder ausgebildet im Ruhezustand den maximalen Abstand zwischen oberem und unterem Träger festlegt, bei einer Rotation jedoch aufgrund der Fliehkraftwirkung die Fäden bzw. Filamente in radialer Richtung nach außen gedrückt werden, so daß dadurch die bewegliche Einspannung, z.B. am unteren Träger den Abstand zwischen oberem und unterem Träger zu verkürzen versucht und die Wendelfeder komprimiert wird, das Ausmaß der Ausbauchung somit drehzahlabhängig ist.

Die Vorrichtung nach der Erfindung arbeitet somit in sehr einfacher und effektiver Weise, ist besonders wirtschaftlich, ergibt eine extrem gleichmäßige und schonende Bearbeitung des Werkstückes, eine hohe Standzeit der Werkzeugelemente und eine Anpassung an unterschiedliche Entgratprobleme bzw. zu entgratende Kunststoff- und Gummiformteile. Insbesondere eignet sich eine derartige Vorrichtung für eine automatische Entgratung an Roboter-Stationen. Werkzeug und Werkstück sind relativ zueinander einstellbar angeordnet.

Nachstehend wird die Erfindung in Verbindung mit der Zeichnung anhand zweier Ausführungsbeispiele erläutert.
- Fig. 1: zeigt schematisch eine Seitenansicht einer Ausführungsform der Erfindung sgemäßen Vorrichtung,
- Fig. 2: eine andere Ausführungsform der Erfindung in Seitenansicht, und
- Fig. 4: eine Aufsicht auf den Träger nach Fig. 2.

Ein z.B. durch einen nicht dargestellten Spindelantrieb in Rotation versetzbarer Schaft 1 nimmt in seinem oberen Bereich einen oberen Träger 2 und in seinem unteren Bereich einen unteren Träger 3 auf. Der untere Träger 3 ist auf dem Schaft 1 höhenbeweglich angeordnet und nach unten durch eine Kontermutter 4 festgelegt. Zwischen oberem Träger 2 und unterem Träger 3 sind Werkzeugelemente 5, 6 in Form von Fäden, Filamenten, Schnüren oder dgl. gespannt. Der Abstand der beiden Träger 2 und 3 wird durch eine am Schaft 1 festgelegte Wendelfeder 7 bestimmt, die den unteren Träger 3, der durch die Kontermutter 4 festgelegt ist, nach unten drückt. Die Fäden, Filamente oder dgl. 5, 6 sind mit ihren oberen Enden 8, 9 im oberen Träger 2, die entgegengesetzten Enden 10, 11 im unteren Träger 3 befestigt, und zwar einzeln oder bündelweise. Die Filamente sind hierzu beispielsweise mit ihren Enden 8, 9 sowie 10, 11 am Außenumfang des Trägerkörpers 13 festgelegt und werden durch Aufsetzen des jeweiligen Deckels 14, 16 festgeklemmt. Die Feder 7 ist an dem beweglichen Ende auf einen Schaftkopf 12 aufge-setzt und daran befestigt. Der Kopf 12 ist mit dem unteren Träger 3 verbunden und beide sind gemeinsam auf dem Schaft 1 geführt. Durch Änderung der Drehzahl des Schaftes 1 wird die auf die Werkzeugelemente 5, 6 ausgeübte Fliehkraft verändert. In Abhängigkeit davon wird der bewegliche untere Träger 3 auf dem Schacht 1 nach oben oder nach unten bewegt. Dieser Bewegung wirkt die Federkraft der Feder 7 entgegen.

Mit 17 ist die Drehrichtung des rotierenden Schaftes 1, mit 18 die radiale Bewegung der Werkzeugelemente 5, 6 und mit 19 die axiale Bewegung der Feder 7 sowie des unteren Trägers 3 und damit die Ausbauchung der Werkzeugelemente 5, 6 angedeutet.

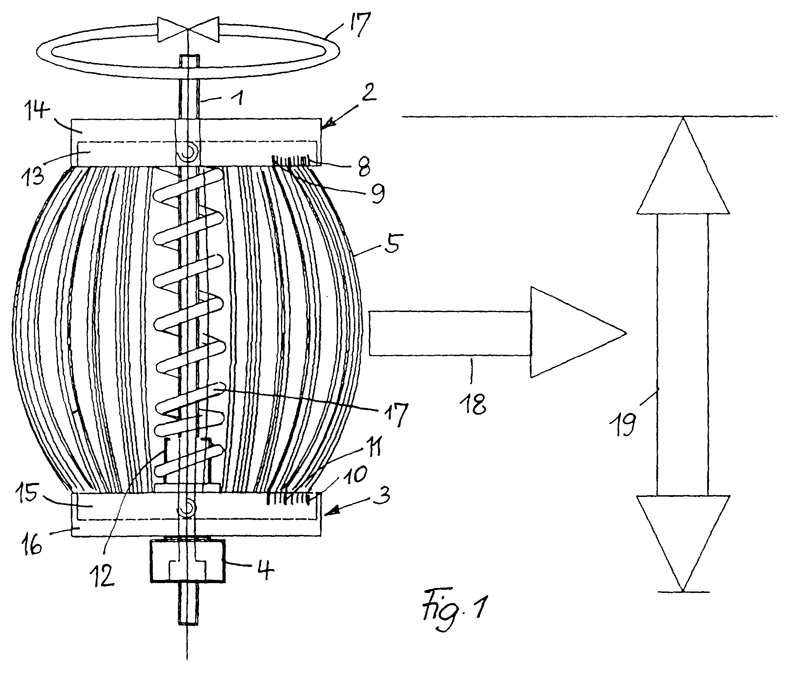

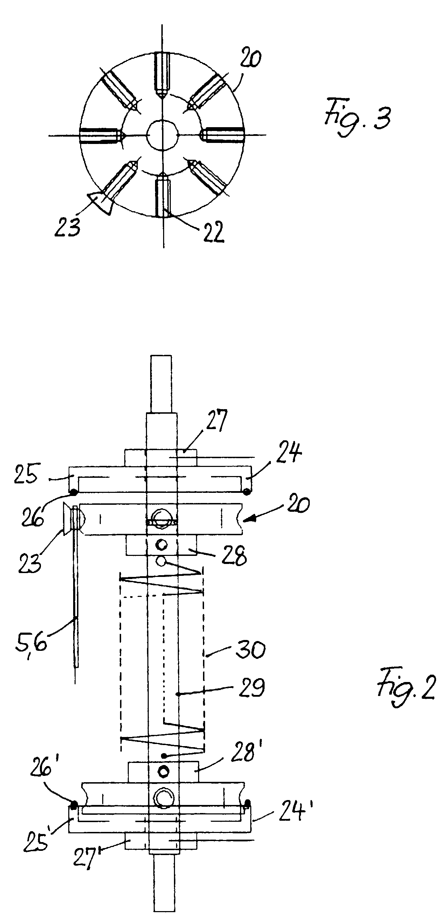

Die Ausführungsform nach den Figuren 2 und 3 zeigt einen oberen Träger 20 und einen unteren Träger 21 mit jeweils einer Mehrzahl von in Umfangsrichtung versetzten, radial nach außen über den Träger 20 bzw. 21 vorstehenden Ansätzen 23, z.B. Schraubbolzen, die über Schäfte 22 mit dem betreffenden Träger verschraubt sind. Den Trägern 20, 21 ist jeweils ein Abschlußdeckel 24, 24' zugeordnet, dessen Umfangsrand 25, 25' am freien Ende eine Dichtung 26, 26', z.B. einen O-Ring aufnimmt, der über eine Klemmvorrichtung 27, 27' einen Druck auf die in den Ansätzen 22 geführten Fäden 5, 6 ausübt. Eine weitere Spannvorrichtung 28, 28' ist auf der entgegengesetzten Seite des jeweiligen Trägers 20, 21 auf dem Schaft 29 vorgesehen. Zwischen den beiden Spannvorrichtungen 28, 28' ist eine Druckfeder 30 gespannt, die die Träger 20, 21 auseinander drückt und die Fäden 5, 6 gespannt hält. Bei Rotation der Vorrichtung bewirkt die Fliehkraft eine Ausbauchung der Fäden 5, 6 (wie in Fig. 1 gezeigt), und damit eine Relativbewegung des einen Trägers gegen den anderen, wobei gleichzeitig die Druckfeder 30 komprimiert wird.

Fäden 5, 6 sind hierbei z.B. in Rillen der Ansätze 23 positioniert. Sie können fortlaufend von einem oberen Ansatz zu einem unteren Ansatz (einzeln oder in Bündeln), dann zum in Umfangsrichtung nächsten oberen Ansatz usw., oder jeweils nur zwischen oberen und unteren, einander zugeordneten Ansätzen geführt sein, oder in einem beliebigen anderen Schema gewickelt sein.

## Patentansprüche

1. Vorrichtung zum Entgraten von Werkstücken, insbesondere Formteilen oder Gießteilen aus Kunststoff, Gummi oder dgl. Material, mit einem drehbaren Schaft und in Achsrichtung koaxial zur Schaftachse verlaufenden, linienförmigen, relativ zum Schaft festgelegten Werkzeugelementen, die sich bei rotierendem Schaft in radialer Richtung unter Einwirkung der Fliehkraft ausbauchen können,
dadurch gekennzeichnet, daß am Schaft (1) ein oberer und ein unterer Träger (2, 3) befestigt sind, die Werkzeugelemente (5, 6) aus einzelnen Fäden bzw. Fadenbündeln bestehen, deren Enden (8, 9, 10, 11) im oberen und unteren Träger (2, 3) befestigt sind, und zwischen oberem und unterem Träger (2, 3) eine Federanordnung (7) konzentrisch zum Schaft (1) angeordnet ist.

2. Vorrichtung nach Anspruch 1, dadurch gekennzeichnet, daß die Werkzeugelemente (5, 6) Filamente, Fäden, Schnüre oder dergl. nachgiebige bzw. auslenkbare Elemente sind, die einzeln oder in Bündeln am oberen und unteren Träger (2, 3) befestigt sind.

3. Vorrichtung nach Anspruch 1 oder 2, dadurch gekennzeichnet, daß die Enden der Fäden bzw. Filamente (5, 6) an den Trägern (2, 3) eingeklemmt sind.

4. Vorrichtung nach Anspruch 3, dadurch gekennzeichnet, daß die Enden (8, 9, 10, 11) der Fäden bzw. Filamente (5, 6) zwischen Trägerkörper (13, 15) und diesem übergreifenden deckelartigen Abschluß (14, 16) eingeklemmt sind.

5. Vorrichtung nach einem der Ansprüche 1 - 4, dadurch gekennzeichnet, daß dem oberen bzw. unteren Träger (2 oder 3) eine Kontermutter (4) zugeordnet ist, die auf dem Schaft (1) einstellbar angeordnet ist und die den maximalen Abstand zwischen oberem und unterem Träger (2, 3) festlegt.

6. Vorrichtung nach Anspruch 1, dadurch gekennzeichnet, daß die oberen und unteren Träger (20, 21) auf ihrer Umfangsfläche radial nach außen gerichtete Ansätze (22) aufweisen, die zur Aufnahme der Fäden bzw. Fadenbündel (5, 6) ausgebildet sind.

7. Vorrichtung nach Anspruch 6, dadurch gekennzeichnet, daß die Ansätze (22) in Bohrungen der Umfangsfläche der Träger (20, 21) eingeschraubte Schraubbolzen sind, die zur Aufnahme der Fäden bzw. Fadenbündel ausgebildete Vorkehrungen (23), z.B. Rillen, Schraubköpfe oder dergl. aufweisen.

8. Vorrichtung nach Anspruch 4, 6 oder 7, dadurch gekennzeichnet, daß ein im unteren und oberen Bereich des Schaftes (1) angeordneter deckelartiger Abschluß am freien Umfangsende eine Ringdichtung, z.B. eine O-Ringdichtung aufweist, die so angeordnet ist, daß sie sich gegen die um die Ansätze geschlungenen Fäden bzw. Fadenbündel unter Druck legt und die Fäden bzw. Fadenbündel im Betrieb festlegt.

9. Vorrichtung nach einem der Ansprüche 6 - 8, dadurch gekennzeichnet, daß der obere und der untere deckelartige Abschluß durch Kontermuttern festgelegt und damit die O-Ringe gegen die Fäden bzw. Fadenbündel gedrückt werden.

10. Vorrichtung nach einem der Ansprüche 6 - 9, dadurch gekennzeichnet, daß zumindest einer der Träger auf dem Schaft höhenbeweglich angeordnet ist und durch Kontermutter und Stellschraube nach außen auf dem Schaft begrenzt ist.

## Claims

1. Apparatus for deburring workpieces, in particular moulded parts or castings of plastics, rubber or the like material, comprising a rotatable shaft and linear tool elements which extend in the axial direction coaxially with respect to the axis of the shaft and which are secured relative to the shaft and which, when the shaft rotates, can bulge out in a radial direction under the effect of centrifugal force, characterised in that an upper and a lower carrier (2, 3) are secured to the shaft (1), the tool elements (5, 6) comprise individual threads or thread bundles whose ends (8, 9, 10, 11) are secured in the upper and lower carriers (2, 3), and a spring arrangement (7) is arranged concentrically with respect to the shaft (1) between the upper and lower carriers (2, 3).

2. Apparatus according to claim 1 characterised in that the tool elements (5, 6) are filaments, threads, cords or the like flexible or deflectable elements which are secured individually or in bundles to the upper and lower carriers (2, 3).

3. Apparatus according to claim 1 or claim 2 characterised in that the ends of the threads or filaments (5, 6) are clamped in position on the carriers (2, 3).

4. Apparatus according to claim 3 characterised in that the ends (8, 9, 10, 11) of the threads or filaments (5, 6) are clamped in position between a carrier body (13, 15) and a cover-like closure (14, 16) which engages thereover.

5. Apparatus according to one of claims 1 to 4 characterised in that associated with the upper and the lower carrier (2 or 3) respectively is a lock nut (4) which is arranged adjustably on the shaft (1) and which fixes the maximum spacing between the upper and lower carriers (2, 3).

6. Apparatus according to claim 1 characterised in that on their peripheral surface the upper and lower carriers (20, 21) have radially outwardly directed attachments (22) which are adapted to carry the threads or thread bundles (5, 6).

7. Apparatus according to claim 6 characterised in that the attachments (22) are screw bolts which are screwed into bores in the peripheral surface of the carriers (20, 21) and which have provisions (23), for example grooves, screw heads or the like, which are adapted to carry the threads or thread bundles.

8. Apparatus according to claim 4, claim 6 or claim 7 characterised in that a cover-like closure arranged in the lower and the upper regions of the shaft (1) has at the free peripheral end a ring seal, for example an O-ring seal, which is so arranged that it bears under pressure against the threads or thread bundles which are wound around the attachments, and fixes the threads or thread bundles in operation.

9. Apparatus according to one of claims 6 to 8 characterised in that the upper and the lower cover-like closures are secured by lock nuts and thus the O-rings are pressed against the threads or thread bundles.

10. Apparatus according to one of claims 6 to 9 characterised in that at least one of the carriers is arranged movably in respect of height on the shaft and is limited outwardly on the shaft by a lock nut and an adjusting screw.

## Revendications

1. Dispositif d'ébavurage de pièces, notamment de pièces de forme et de pièces moulées en matière plastique, caoutchouc ou matière analogue, comprenant un arbre pouvant être entraîné en rotation et des éléments d'outil de forme linéaire qui s'étendent suivant leur direction axiale coaxialement à l'axe de l'arbre et sont fixés par rapport à l'arbre et qui, lorsque l'arbre tourne, peuvent former un renflement suivant la direction radiale sous l'effet de la force centrifuge, caractérisé en ce qu'un support supérieur et un support inférieur (2, 3) sont fixés sur l'arbre (1), les éléments d'outil (5, 6) sont constitués de filaments, fils ou analogues, individuels, ou de faisceau de fils, dont les extrémités (8, 9, 10, 11) sont fixées dans le support supérieur et le support inférieur (2, 3) et un dispositif à ressort (17) est disposé, d'une manière concentrique à l'arbre (1), entre les supports supérieur et inférieur (2, 3).

2. Dispositif suivant la revendication 1, caractérisé en ce que les éléments d'outil (5, 6) sont des filaments, fils, cordons ou éléments analogues pouvant fléchir élastiquement ou pouvant être déviés qui sont fixés individuellement ou en faisceaux aux support supérieur et support inférieur (2, 3).

3. Dispositif suivant la revendication 1 ou 2, caractérisé en ce que les extrémités des fils ou filaments (5, 6) sont bloquées sur les supports (2, 3).

4. Dispositif suivant la revendication 3, caractérisé en ce que les extrémités (8, 9, 10, 11) des fils ou filaments (5, 6) sont bloquées entre un corps de support (13, 15) et un élément de serrage (14, 16) en forme de couvercle recouvrant celui-ci.

5. Dispositif suivant l'une des revendications 1 - 4, caractérisé en ce qu'il est prévu, associé au support supérieur ou inférieur (2 ou 3), un contre-écrou (4) qui est disposé d'une manière réglable sur l'arbre (1) et qui détermine l'espacement maximal entre les supports supérieur et inférieur (2, 3).

6. Dispositif suivant la revendication 1, caractérisé en ce que, sur leur surface périphérique, les supports supérieur et inférieur (20, 21) comportent des parties rapportées (22) orientées radialement vers l'extérieur qui sont agencées de façon à recevoir les fils ou faisceaux de fils (5, 6).

7. Dispositif suivant la revendication 6, caractérisé en ce que les éléments rapportés (22) sont des goujons filetés qui sont vissés dans des perçages de la surface périphérique des supports (20, 21) et qui comportent des agencements (23), par exemple gorges, têtes de vis ou analogues, qui sont réalisés pour recevoir les fils ou faisceaux de fils.

8. Dispositif suivant la revendication 4, 6 ou 7, caractérisé en ce qu'une pièce de serrage en forme de couvercle, disposée dans la zone inférieure et la zone de supérieure de l'arbre (1), comporte, à l'extrémité périphérique libre, une bague d'étanchéité, par exemple un joint torique, qui est disposée de manière à s'appliquer sous pression sur les fils ou faisceaux de fils enroulés autour des pièces rapportées et à immobiliser, en fonctionnement, les fils ou faisceau de fils.

9. Dispositif suivant l'une des revendications 6 - 8, caractérisé en ce que l'élément de serrage en forme de couvercle supérieur et l'élément de serrage en forme de couvercle inférieur sont immobilisés au moyen de contre-écrous et qu'ainsi les joints toriques sont appliqués sous pression sur les fils ou faisceaux de fils.

10. Dispositif suivant l'une des revendications 6 - 9, caractérisé en ce qu'au moins l'un des supports est disposé d'une manière mobile en hauteur sur l'arbre et est limité vers l'extérieur sur l'arbre par contre-écrou et vis d'arrêt.
